# EUROPEAN PATENT APPLICATION

(11) **EP 1 871 037 A1**
(43) Date of publication of application: **26.12.2007**
(21) Application number: 06112134.9
(22) Date of filing: 31.03.2006
(51) Int. Cl.: H04L 12/24

(54) **Method, system and apparatus for storing and analysing user interaction experiences**

(71) Applicant: Agilent Technologies, Inc., Santa Clara, CA 95051 (US)
(72) Inventor: Bond, David, South Queensferry, Lothian EH30 9TG (GB)
(74) Representative: Kurz, Peter

(57) **Abstract**

A system for building a database (136) recording user interaction experiences comprises a data collection stage (310) in which user interaction data (320) generated by an agent entity (202) supported by a communications handset (118) is collected along with user interaction feedback (316) expressed by a user (312) of the communications handset (118). The user interaction data (320) is correlated with the user interaction feedback (316) and stored as an association between the user interaction data (320) and the user interaction feedback (316) in the database (136).

## Description

The present invention relates to a method of building a database of the type that, for example, records user interaction experiences in relation to operation of a communications device. The present invention also relates to a system for building a database of the type that, for example, records user interaction experiences in relation to operation of a communications device. The present invention further relates to a server apparatus for building a database of the type that, for example, records user interaction experiences in relation to operation of a communications device.

### Background Art

In the field of performance analysis in relation to communications devices, it is known for service providers or handset manufacturers to provide so-called "friendly users" with pre-release handsets in a trial and manually solicit feedback by asking the friendly users to express their views with respect to operation of the pre-release handset through focus groups, questionnaires and/or otherwise manually recording thoughts, experiences and/or reactions of the friendly users to the new product. Likewise, the same manual solicitation of feedback can take place in relation to a new service using an existing handset model or the pre-release handset. The information collected can then be used by the service providers to perform marketing tasks. However, the process of information collection is highly labour-intensive and limited to the numbers of friendly users, (pre-trial) handsets and the period of time over which the trial is conducted.

It is therefore difficult to predict reliably future usage patterns of new handset models and services in order to perform yield management tasks, for example radio network planning, Information Technology (IT) infrastructure scaling, advertising and/or marketing budget allocation.

As mentioned above, traditional information collection techniques have been manual in nature and so have relied upon careful construction of questionnaires and the focus groups in order to maximise effective use of the information available.

### Disclosure of Invention

According to a first aspect of the present invention, there is provided a method of building a database recording user interaction experiences, the method comprising: a data collection stage comprising: collecting user interaction data generated by automation, the user interaction data being associated with operation of a communications device; collecting user interaction feedback, the user interaction feedback also being associated with the operation of the communications device; storing the user interaction data and the user interaction feedback so as to record an association between the user interaction data and the user interaction feedback.

The user interaction feedback may be expressed by a user.

The agent entity may be supported by the communications device generates the user interaction data.

The method may further comprise: collecting an assessment of the user interaction feedback, the assessment being expressed by an observer of the user.

The assessment may be an evaluation of the user interaction feedback by the observer. The assessment may employ a principle of a behavioural science.

The method may further comprise: correlating the user interaction data with the user interaction feedback. The method may further comprise: correlating the assessment of the user interaction feedback with the user interaction data.

The user interaction data may be collected during a first time interval different to a second time interval for collecting the user interaction feedback.

The method may further comprise: varying a level of performance in relation to the operation of the communications device during a predetermined period of time.

The level of performance may be a quality of service experienced by the user via the communications device.

The method may further comprise: an in-field stage comprising: collecting subsequent user interaction data by automation, the subsequent user interaction data relating to subsequent operation of another communications device by another user.

The method may further comprise: analysing the subsequent user interaction data in relation to the stored user interaction data and the stored user feedback data collected in the data collection stage in order to estimate a user interaction experience corresponding to the subsequent user interaction data. The analysis of the subsequent user interaction data may comprise use of projection, interpolation and/or extrapolation techniques in order to estimate the user interaction experience.

The analysis of the subsequent user interaction data may also comprise use of the assessment of the user interaction feedback in relation to the stored user interaction data.

The stored user feedback data may be indicative of user satisfaction in relation to operation of the another communications device.

The method may further comprise: storing the subsequent user interaction data so as to record the correspondence between the subsequent user interaction data and the estimate of the user interaction experience.

The method may further comprise: a plurality of user interaction data including the subsequent user interaction data; and analysing the plurality of user interaction data in relation to a search criterion in order to generate a report.

According to a second aspect of the present invention, there is provided a method of analysing a user interaction experience in relation to operation of a communications device, the method comprising: collecting user interaction data by automation, the user interaction data relating to operation of the communications device by a user; analysing the user interaction data in relation to a database so as to determine the user interaction experience in relation to operation of the communications device, the database associating a plurality of user interaction data previously collected by automation with a plurality of previously collected user interaction feedbacks.

The user interaction experience may correspond to a user interaction feedback of the previously collected user interaction feedbacks.

According to a third aspect of the present invention, there is provided a system for building a database recording user interaction experiences, the system comprising: a plurality of users having a respective plurality of communications devices; a processing resource arranged to support collection of a plurality of user interaction data generated by automation, and collection of a plurality of user interaction feedbacks, the plurality of user interaction data being respectively associated with operation of the plurality of communications devices and the plurality of user interaction feedbacks also being respectively associated with operation of the plurality of communications devices; and a store for storing the plurality of user interaction data and the plurality of user feedbacks so as to record a plurality of respective associations between the plurality of user interaction data and the plurality of user interaction feedback.

The system may further comprise a plurality of agent entities respectively supported by the plurality of communications devices.

The system may further comprise collecting a plurality of assessments respectively of the plurality of user interaction feedbacks, the plurality of assessments being expressed by an observer of the plurality of users.

The system may further comprise correlating the plurality of user interaction data with the plurality of user interaction feedbacks.

According to a fourth aspect of the present invention, there is provided a system for analysing a user interaction experience in relation to operation of a communications device, the system comprising: a processing resource arranged to collect user interaction data by automation, the user interaction data relating to operation of the communications device; wherein the processing resource is further arranged to analyse the user interaction data in relation to a database so as to estimate the user interaction experience in relation to operation of the communications device, the database associating a plurality of user interaction data previously collected by automation with a plurality of previously collected user interaction feedbacks.

The user interaction experience may correspond to a user interaction feedback of the previously collected user interaction feedbacks.

According to a fifth aspect of the present invention, there is provided a server apparatus for building a database recording user interaction experiences, the apparatus comprising: a processing resource arranged to collect user interaction data generated by automation, and to collect user interaction feedback, the user interaction data being associated with operation of a communications device, and the user interaction feedback also being associated with operation of the communications device; wherein the processing resource is further arranged to initiate storage of the user interaction data and the user interaction feedback so as to record an association between the user interaction data and the user interaction feedback.

The apparatus may further comprise collecting a plurality of assessments respectively of the plurality of user interaction feedbacks, the plurality of assessments being expressed by an observer of the plurality of users.

The apparatus may further comprise correlating the plurality of user interaction data with the plurality of user interaction feedbacks.

According to a sixth aspect of the present invention, there is provided a monitoring server apparatus for analysing a user interaction experience in relation to operation of a communications device, the apparatus comprising: a processing resource arranged to collect user interaction data by automation, the user interaction data relating to operation of the communications device; wherein the processing resource is further arranged to analyse the user interaction data in relation to a database so as to estimate the user interaction experience in relation to operation of the communications device, the database associating a plurality of user interaction data previously collected by automation with a plurality of previously collected user interaction feedbacks.

The user interaction experience may correspond to a user interaction feedback of the previously collected user interaction feedbacks.

It is thus possible to provide a system, apparatus and method that enables association between manually collected user interaction feedback, and optionally assessments made by an observer, with automated measurements, namely the user interaction data. Consequently, a database can be built that can be continually augmented by user interaction data, collected by automation. Hence, user experiences can be reliably inferred and identified from the user interaction data collected "in the field" in conjunction with data acquired during a data collection stage. Thus, the database can be used with confidence in relation to radio network planning, IT infrastructure scaling, advertising and/or marketing.

### Brief Description of Drawings

At least one embodiment of the invention will now be described, by way of example only, with reference to the accompanying drawings, in which:
**Figure 1** is a schematic diagram of a communications network incorporating a system constituting an embodiment of the invention;
**Figure 2** is a schematic diagram of a communication device employed in the system of Figure 1;
**Figure 3** is a schematic diagram of the system of Figure 1, in greater detail; and
**Figure 4** is a flow diagram of a method of building a database used in the system of Figures 1 and 3.

### Detailed Description

Throughout the following description identical reference numerals will be used to identify like parts.

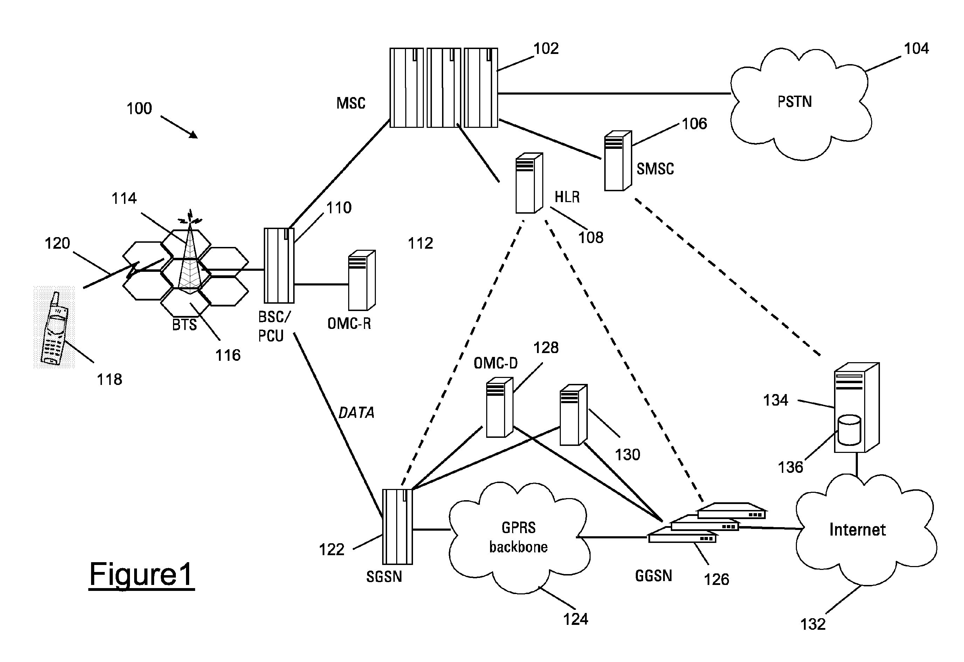

Referring to Figure 1, a monitoring system is implemented in a wireless communications network 100, the communications network 100 being, in this example, a Global Systems for Mobile Communications (GSM) network. The communication network 100 is capable of providing or facilitating voice communication and/or data transactions, services, or communications. The skilled person will, of course, appreciate that other communications networks can be used in place of or overlay the GSM communications network described herein, for example other telecommunication networks such as a Universal Mobile Telecommunications System (UMTS) network, wireless networks, telephone networks and data communication networks.

For the sake of conciseness of description and hence ease of understanding, the GSM communications network is not described in detail, but the skilled person will recognise that the GSM communications network comprises other functional and structural aspects not described herein.

Referring again to Figure 1, the communications network 100 comprises a Mobile Switching Centre (MSC) 102 coupled to a Public Switched Telephone Network (PSTN) 104, a Short Messaging Service Centre (SMSC) node 106, a Home Location Register (HLR) 108 and a Base Station Controller (BSC) 110 that also has functionality so as to serve as a Packet Control Unit (PCU) to support the GPRS. The BSC 110 is coupled to an Operations and Maintenance Centre-Radio (OMC-R) 112 and a base station 114, the base station 114 supporting a number of cells 116 in one of which a communications apparatus, for example a communications terminal, such as a cellular communications handset 116, is located for communication with the communications network 100. The communications handset 118 is capable of communicating with the base station 114 via a Radio-Frequency (RF) interface 120. The communications handset 118 can be any device having a user interface capability associated with it, a network connectivity capability and an ability to accept software applications such as an agent entity, for example a software probe application, as described later herein. Examples of other communications apparatus include, but are not limited to, wireless communication devices, telematics devices or modules, Personal Computers (PCs), consumer appliances such as set-top boxes, and/or Personal Digital Assistants (PDAs).

In addition to being coupled to the base station 114, the BSC 110 is also coupled to a Serving GPRS Support Node (SGSN) 122, the HLR 108 being capable of communicating with the SGSN 122. The SGSN 122 is also coupled to a GPRS backbone network 124, the GPRS backbone network 124 being coupled to a Gateway GPRS Support Node (GGSN) 126. Both the SGSN 122 and the GGSN 126 are also coupled to an Operations and Maintenance Centre-Data (OMC-D) 128 and a charging gateway 130. The HLR 108 is also capable of communicating with the GGSN 126.

The GGSN 126 is coupled to, in this example, a data communications network, for example an Internet 132, a monitoring server 134 being coupled to the Internet 132 and capable of communicating with the SMSC 106. The monitoring server 134 comprises a persistent store, for example a database 136, though the persistent store can be remotely located from the monitoring server 134. The monitoring server 134 is, in this example, able to send processed data to the persistent store for association and subsequent retrieval.

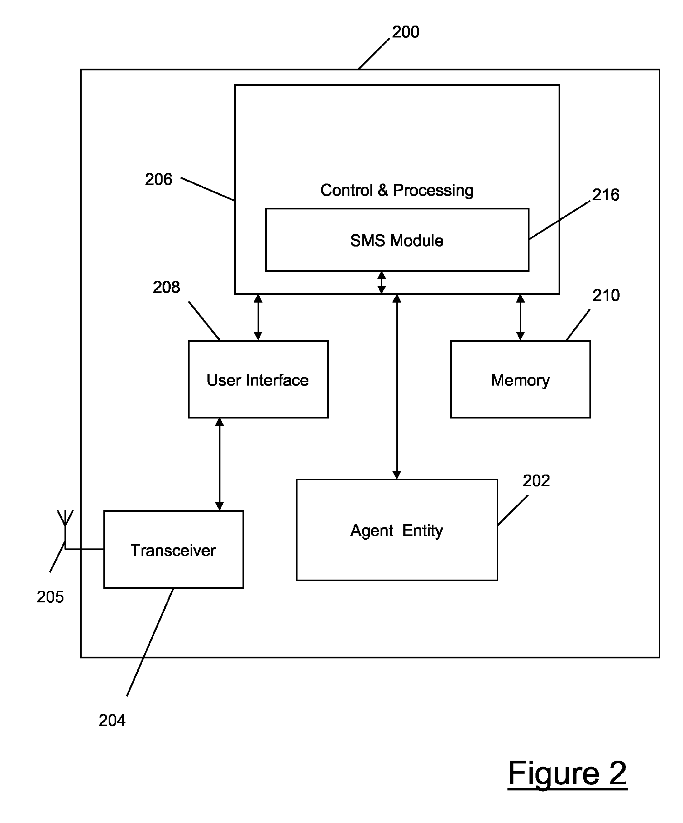

Turning to Figure 2, the communications handset 118 comprises a processing resource 200, such as a chipset, capable of supporting the agent entity 202 and thus functioning as a probe, as well as being operable to function in the communications network 100.

The agent entity 202 is of the type described in US patent publication number US 2003/0134631 A1. The skilled person will, of course, realise that some of the functionality of US 2003/0134631 does not have to be employed and is application specific. The agent entity 202 is able to monitor, measure and capture transactions occurring in the communications network 100, as seen from the perspective of a user of the communications handset 118, and then provide this user interaction data to the monitoring server 134 via a communications link using the RF interface 120. The communications link can be any means suitable for communicating between the communications handset 118 and the communications network 100 and thus include, by way of example and not limitation, wireless, Internet and/or virtual private network (VPN) tunnelling. For example, the communications link can be an Internet link to a public or private network server or it can be a private network medium to a private network, as in the case of a virtual private network (VPN) tunnel to a server residing at a corporate intranet site or it can be an HTTP connection via the Internet to the monitoring server 134. The measurement values of the user interaction data can be in CSV (Comma Separated Values) format passed in an HTTP POST parameter list. The user interaction data can optionally be encrypted; encryption can be necessary in environments in which user and data privacy is a concern.

The user interaction data can be network engineering metric data and/or user profile data and can be used to analyse and/or optimise functionality and quality of the communications network 100 as seen by the user of the communications handset 118. Operation and quality of the communications network 100 is managed by a network operator (not shown).

In this example, the processing resource 200 also supports: a transceiver element 204 coupled to an antenna 205 and having both receiver and transmitter functionality for facilitating communications between the communications handset 118 and the communications network 100; a controller and processing capability, such as embedded JAVA processing, which, together, can be referred to as a control and processing element 206; a user interface element 208, such as a keypad, a microphone, a loudspeaker and/or a display screen, to allow the user to both send and receive communications and transactions in the communications network 100 via the communications handset 118. In this respect, communications engaged in by the user of the communications handset 118 can be manifested as voice and/or data transactions between the user and the communications network 100 via the user interface 208.

The processing resource 200 further comprises a memory element 210, such as a buffer, for storing, at least temporarily, transaction data that is monitored, measured and captured by the communication device prior to it being transmitted to the monitoring server 134. The user interface element 208 can have an ability to monitor key presses made by the user, recognise voice activity of the user, and an ability to create a data file of the actual user experience on the communications handset 118.

The agent entity 202 is dynamically and remotely configurable so as to be able to monitor, measure and capture at least some portion of the characteristics of the transactions in which the user engages, from the perspective of the user, as the user interaction data. The functionality of the agent entity 202 is performed in accordance with a functional definition of the agent entity 202 that is able to be, for example, dynamically and remotely configured, added to, changed, deleted and/or upgraded at will via the communications link by the network operator or other party interested in controlling operation of the agent entity 202. The user interaction data collected by the agent entity 202 can, as mentioned above, be temporarily stored in the memory 210, the control and processing element 206 providing control of other elements in the communications handset 118 and processing capability required by the agent entity 202.

The agent entity 202 can be considered a third party (3P) application capable of residing and operating within the communications handset 118. The software of the agent entity 202 can be implemented in any desired format, for example an open-development environment that facilitates the development of portable 3P applications. Examples of acceptable application and/or programming platforms and environments suitable for implementation of the probe element include, but are not limited to, the following: Sun JAVA (J2ME), C, C++, Qualcomm Binary Runtime Environment for Wireless (BREW) application environment, Microsoft Windows Mobile, Symbian operating system, or proprietary third party operating system, environment, and/or programming language. The agent entity 202, which can include diagnostic criterion for performing network diagnostics, can be downloaded from the network operator to the communications handset 118 via the communications link, such as over the Internet. The agent entity 202 can have an identification element, such as a control or serial number, which can be used to associate a particular instantiation of the agent entity 202 with a particular network subscriber or communications device. Of course, if desired, the agent entity 202 can be provided in a pre-configured form in the communications handset 118 as a logic circuit.

A process and timing of collection of user interaction data for a particular communication device is controlled by the functional definition of the software of the agent entity 202, which as mentioned above can be dynamically changed as desired. Collection of data can be initiated in response to occurrence of an event, such as the user turning on the communications handset 118 or a dropped call, and either pre- or post-event collection is selectable for a predetermined period of time bracketing an event, such as 30 seconds within the occurrence of an event.

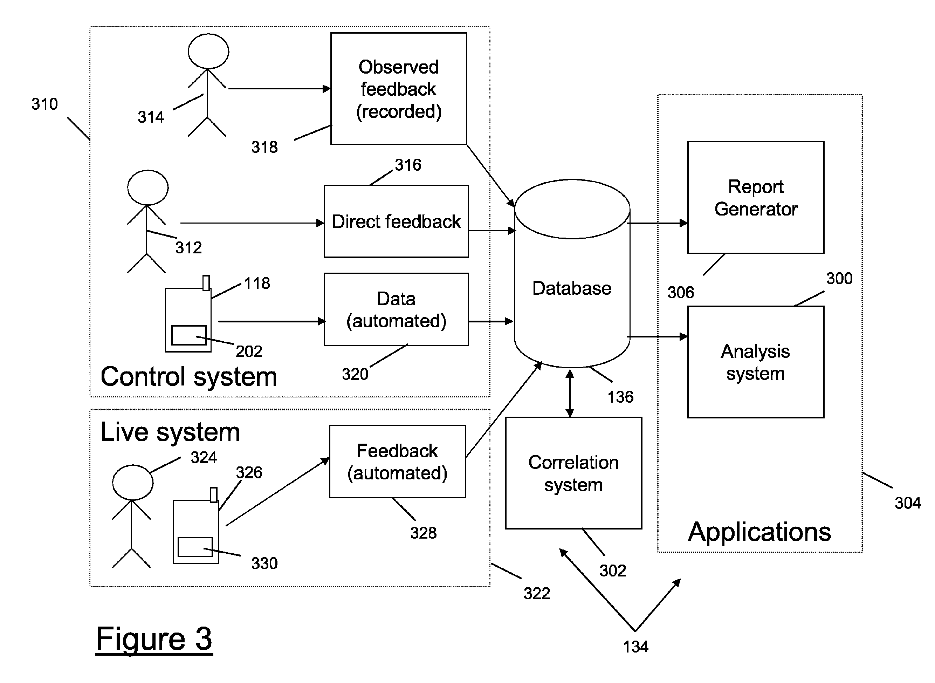

Turning to Figure 3, the monitoring server 134 comprises another processing resource (not shown) that supports, in addition to the database 136, a correlation system 302. The monitoring server 134 also supports a suite of applications 304, for example an analysis system 300 and a report generation application 306.

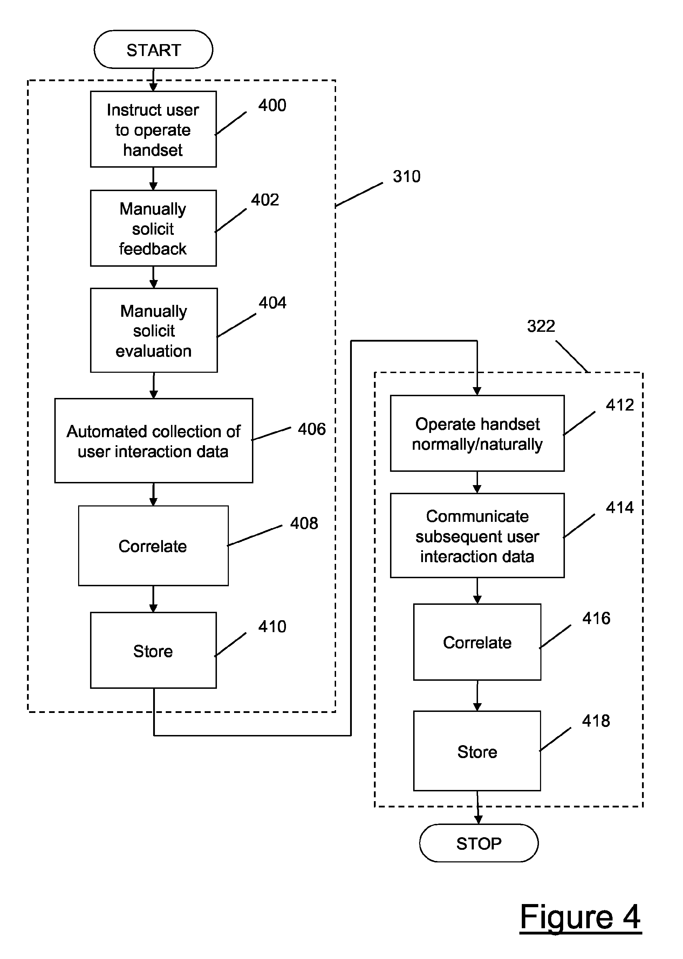

In operation (Figures 3 and 4), the database 136 is initially populated during a data collection stage 310. The data collection stage 310 employs a plurality of users having a respective plurality of communications handsets, like the communications handset 118. Since, the procedures performed in relation to each of the plurality of communications handsets are alike, execution of the data collection stage 310 will be described hereinafter only in relation to the user 312 of the communications handset 118. However, the skilled person will appreciate that the execution of the data collection stage 310 applies equally to the remaining communications handsets of the plurality of communications handsets.

The user 312 is instructed (Step 400) to operate the communications handset 118 in a predetermined manner. In this example, an observer 314 oversees operation of the communications handset 118 by the user 312, the observer 314 assessing the response(s) of the user 312 when operating the communications handset 118. The user 312 is required (Step 402) to express, manually, opinions and/or feelings in relation to operation of the communications handset 118, for example in writing, orally and/or via a man-machine interface. Where written or oral feedback is solicited, the opinions and/or feelings are subsequently input to the database 136 using any suitable man-machine interface. For example, the opinions and/or feelings can be recorded using objective questions regarding subjective reactions of the user 312, such as in the form of answers to a questionnaire. The information, or user interaction feedback 316, expressed is recorded electronically in the database 136. Similarly, the observer 314 is required (Step 404) to express, manually, the assessment carried out in relation to the user interaction feedback. The assessment serves as an evaluation 318 of the user interaction feedback 316 expressed by the user 312, for example observations of reactions of the user 312 in relation to use of the communications handset 118 of which the user 312 is not necessarily aware or trying to suppress, such as frustration at an inability to use a feature of the communications handset 118. In this respect, the observer 314 is, in this example, skilled in a behavioural science and so employs principles of the behavioural science to provide the evaluation 318.

In this example, the evaluation 318 of the observer 314 is used to filter and/or weight the user interaction feedback 316 provided by the user 312 prior to storage of the user interaction feedback in the database 136. Additionally, or alternatively, the evaluation 318 is recorded in the database 136 against the user interaction data 320. The evaluation 318 can be recorded in conjunction with the user interaction data 320 in place of the user interaction feedback 316.

Additionally, the agent entity 202 supported by the communications handset 118 generates the user interaction data 320, of the type described previously, in relation to the operation of the communications handset 118. The user interaction data 320 is then communicated (Step 406) by the agent entity 202 using the communications link supported by the GPRS to the monitoring server 134 for collection by the monitoring server 134.

The monitoring server 134 then uses the correlation system 302 to correlate (Step 408) the user interaction data 320 collected with the user interaction feedback 316 stored (Step 410) in the database 136 so as to record an association between the user interaction data 320 collected by automation and the user interaction feedback 316. The user interaction data 320 can also be correlated with the evaluation 318.

As part of the data collection stage 310, operation in relation to the communications handset 118 can be varied in order to solicit different responses from the user 312. For example, a quality of service, such as a quality of a voice service provided during the data collection stage, can be varied or a menu structure of the communications handset 118 can be varied.

The above data collection stage 310 is performed over a predetermined period of time during which the data is collected in respect of operation of the plurality of communications handsets mentioned above in order to populate the database 136. Further, although collection of the user interaction feedback 316 and the user interaction data 318 seem to be collected at substantially the same time, the user interaction feedback 316 and the user interaction data 318 can be collected during non-overlapping time intervals.

Subsequent to the data collection stage 310, once the database 136 has been populated, an in-field stage 322 is implemented. In the in-field stage 322, another user 324 having another communications handset 326, which may be of the same type as the communications handset 118 depending upon the type of measurements being made by the agent entity 202, is used to collect subsequent user interaction data 328, the other communications handset 326 supporting another agent entity 330 like the agent entity 202 already described above. However, the another user 324 of the another communications handset 326 is not now under supervised test conditions, but during normal, live operating conditions, i.e. "in the field" or, optionally, post-data collection stage. In this respect, the data collection stage 310 does not have to precede the in-field stage 322.

In the in-field stage 322, the another user 324 operates (Step 412) the another communications handset 326 normally, i.e. without instruction to operate the another communications handset 326 in the predetermined manner, for example during the data collection stage 310. The another agent entity 330 supported by the another communications handset 326 generates (Step 414) the subsequent user interaction data 328, of the type described previously, in relation to the operation of the another communication handset 326 during the in-field stage. The subsequent user interaction data 328 is then communicated to the monitoring server 134 using the communications link in the manner already described above in relation to the data collection stage 310.

The subsequent user interaction data 328 is processed (Step 416) by the correlation system 302 in order to identify user interaction feedback previously stored in the database 136 and associated with user interaction data previously stored in the database 136 that corresponds to the subsequent user interaction data collected by the another agent entity 330. In the event that the subsequent user interaction data cannot be correlated with the user interaction data previously stored in the database 136, the processing of the subsequent user interaction data 328 can comprise use of projection, interpolation and/or extrapolation techniques in relation to the user interaction data and the user interaction feedback and/or evaluations previously stored in the database 136 in order to estimate the user interaction experience. The association between the subsequent user interaction data 328 and the user interaction feedback previously stored or the estimate of the user interaction experience is recorded (Step 418) in the database 136.

The analysis of the subsequent user interaction data can also comprise use of the evaluation 318 of the user interaction feedback in relation to the stored user interaction data or the estimate of the user interaction experience.

The skilled person will, of course, appreciate that the another agent entity 330 can generate more than one item of subsequent user data for processing by the correlation system 302.

Subsequently, if required, the report generation application 306 can be executed in order to generate a report providing information in relation to predetermined desired search criteria. In operation, the report generation application 306 accesses the database 136 and retrieves data according to the desired search criteria and organises the retrieved data as one or more report..

In contrast, the analysis system 300 is used in order to extract data from the database 136 by selective manipulation of search criteria.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of building a database recording user interaction experiences, the method comprising:
a data collection stage (310) comprising:
collecting (406) user interaction data (320) generated by automation, the user interaction data (320) being associated with operation of a communications device (118);
collecting (402) user interaction feedback (316, 318), the user interaction feedback (316, 318) also being associated with the operation of the communications device (118);
storing the user interaction data (320) and the user interaction feedback (316, 318) so as to record an association between the user interaction data (320) and the user interaction feedback (316, 318).

2. A method as claimed in Claim 1, wherein the user interaction feedback (316) is expressed by a user (312).

3. A method as claimed in Claim 1 or Claim 2, wherein an agent entity (202) supported by the communications device (118) generates the user interaction data (320).

4. A method as claimed in Claim 1 or Claim 2 or Claim 3, further comprising:
collecting (404) an assessment (318) of the user interaction feedback (316), the assessment being expressed by an observer (314) of a user (312).

5. A method as claimed in Claim 4, wherein the assessment (318) is an evaluation of the user interaction feedback (316) by the observer (314).

6. A method as claimed in Claim 4 or Claim 5, wherein the assessment (318) employs a principle of a behavioural science.

7. A method as claimed in any one of the preceding claims, further comprising:
correlating (408) the user interaction data (320) with the user interaction feedback (316, 318).

8. A method as claimed in any one of the preceding claims, wherein the user interaction data (320) is collected during a first time interval different to a second time interval for collecting the user interaction feedback (316, 318).

9. A method as claimed in any one of the preceding claims, further comprising:
varying a level of performance in relation to the operation of the communications device (118) during a predetermined period of time.

10. A method as claimed in any one of the preceding claims, further comprising:
an in-field stage (322) comprising:
collecting subsequent user interaction data (328) by automation, the subsequent user interaction data (328) relating to subsequent operation of another communications device (326) by another user (324).

11. A method as claimed in Claim 10, further comprising:
analysing (416) the subsequent user interaction data (328) in relation to the stored user interaction data (320) and the stored user feedback data (316) collected in the data collection stage in order to estimate a user interaction experience corresponding to the subsequent user interaction data (328).

12. A method as claimed in Claim 11, further comprising:
storing (418) the subsequent user interaction data (328) so as to record the correspondence between the subsequent user interaction data (328) and the estimate of the user interaction experience.

13. A method as claimed in Claim 11, further comprising:
a plurality of user interaction data (320) including the subsequent user interaction data (328); and
analysing the plurality of user interaction data (320) in relation to a search criterion in order to generate a report.

14. A method as claimed in any one of the preceding claims, further comprising: correlating (418) the assessment of the user interaction feedback (316) with the user interaction data (320).

15. A method of analysing a user interaction experience in relation to operation of a communications device 118), the method comprising:
collecting user interaction data (320) by automation, the user interaction data (320) relating to operation of the communications device (118) by a user (312);
analysing the user interaction data (320) in relation to a database so as to estimate the user interaction experience in relation to operation of the communications device (118), the database associating a plurality of user interaction data (320) previously collected by automation with a plurality of previously collected user interaction feedbacks (316, 318).

16. A system for building a database recording user interaction experiences, the system comprising:
a plurality of users (312) having a respective plurality of communications devices (118);
a processing resource arranged to support collection of a plurality of user interaction data (320) generated by automation, and collection of a plurality of user interaction feedbacks (316, 318) respectively, the plurality of user interaction data (320) being respectively associated with operation of the plurality of communications devices (118) and the plurality of user interaction feedbacks (316, 318) also being respectively associated with operation of the plurality of communications devices (118); and
a store (136) for storing the plurality of user interaction data (320) and the plurality of user feedbacks (316, 318) so as to record a plurality of respective associations between the plurality of user interaction data (320) and the plurality of user interaction feedback (316, 318).

17. A system for analysing a user interaction experience in relation to operation of a communications device (118), the system comprising:
a processing resource arranged to collect user interaction data (320) by automation, the user interaction data (320) relating to operation of the communications device (118); wherein
the processing resource is further arranged to analyse the user interaction data (320) in relation to a database so as to estimate the user interaction experience in relation to operation of the communications device (118), the database associating a plurality of user interaction data (320) previously collected by automation with a plurality of previously collected user interactions.

18. A server apparatus for building a database recording user interaction experiences, the apparatus comprising:
a processing resource arranged to collect user interaction data (320) generated by automation, and to collect user interaction feedback (316, 318), the user interaction data (320) being associated with operation of a communications device (118), and the user interaction feedback (316, 318) also being associated with operation of the communications device (118); wherein
the processing resource is further arranged to initiate storage of the user interaction data (320) and the user interaction feedback (316, 318) so as to record an association between the user interaction data (320) and the user interaction feedback (316, 318).

19. A monitoring server apparatus for analysing a user interaction experience in relation to operation of a communications device (118), the apparatus comprising:
a processing resource arranged to collect user interaction data (320) by automation, the user interaction data (320) relating to operation of the communications device (118); wherein
the processing resource is further arranged to analyse the user interaction data (320) in relation to a database so as to estimate the user interaction experience in relation to operation of the communications device (118), the database associating a plurality of user interaction data (320) previously collected by automation with a plurality of previously collected user interaction feedbacks (316, 318).
